(19) Europäisches Patentamt

European Patent Office

Office européen des brevets

(11) **EP 0 940 867 B1**

(12) **FASCICULE DE BREVET EUROPEEN**

(45) Date de publication et mention
de la délivrance du brevet:
**22.11.2006 Bulletin 2006/47**

(51) Int Cl.:
*H01M 4/92* (2006.01)       *B01J 23/42* (2006.01)
*B01J 23/50* (2006.01)       *B01J 37/02* (2006.01)

(21) Numéro de dépôt: **99400403.4**

(22) Date de dépôt: **19.02.1999**

(54) **Catalyseur bimétallique supporté à base de platine ou d'argent, son procédé de fabrication et son utilisation pour les cellules electrochimiques**

Bimetallischer Trägerkatalysator auf Platin-oder Silberbasis, Verfahren zu seiner Herstellung und Verwendung in elektrochemischen Zellen

Bimetallic platinum or silver based supported catalyst, its preparation and use in electrochemical cells

(84) Etats contractants désignés:
**AT BE CH DE DK ES FI FR GB GR IE IT LI LU NL PT SE**

(30) Priorité: **03.03.1998 FR 9802555**

(43) Date de publication de la demande:
**08.09.1999 Bulletin 1999/36**

(73) Titulaire: **Arkema France**
**92800 Puteaux (FR)**

(72) Inventeurs:
• **Andolfatto, Françoise**
**69006 Lyon (FR)**
• **Miachon, Sylvain**
**69007 Lyon (FR)**

(56) Documents cités:
**EP-A- 0 050 300          EP-A- 0 715 889**
**GB-A- 1 077 128          GB-A- 1 102 725**
**US-A- 4 115 322**

**Description**

La présente invention concerne un catalyseur bimétallique supporté stabilisé à base de platine ou d'argent utilisé dans les électrodes pour cellules électrochimiques.

Plus précisément, l'invention concerne un catalyseur bimétallique supporté à base de platine ou d'argent utilisé pour les électrodes d'une cellule d'électrolyse à membrane et à cathode à réduction d'oxygène qui produit une solution d'hydroxyde alcalin et du chlore par electrolyse d'une solution aqueuse de chlorure alcalin (NaCl, KCl).

Une telle cellule d'électrolyse est généralement constituée d'une membrane échangeuse de cations qui divise la cellule en un compartiment anodique et au moins un compartiment cathodique dans lequel ladite cathode est placée, ledit compartiment étant alimenté par un gaz contenant de l'oxygène.

Les réactions anodiques et cathodiques dans de tels procédés électrolytiques utilisant une cathode à réduction d'oxygène sont :

$$\text{à l'anode } 2Cl^- \rightarrow Cl_2 + 2e$$

$$\text{à la cathode } H_2O + \frac{1}{2}O_2 + 2e \rightarrow 2OH^-$$

Afin d'accélerer les réactions se produisant aux cathodes et d'abaisser en valeur absolue la surtention de réaction, on utilise des catalyseurs généralement des métaux nobles tels que le platine, l'argent, l'or déposés sur des supports conducteurs de courant électrique tels que notamment des matières carbonées ayant une grande surface spécifique ou des substrats métalliques.

De préférence, on utilise le platine ou l'argent, et, tout particulièrement le platine car, bien que ce soit un métal coûteux, c'est celui pour lequel la surtension cathodique est la plus faible en valeur absolue.

La demanderesse a constaté lors, notamment, des périodes d'arrêt des cellules d'électrolyse telles que mentionnées précédemment, une agglomération des particules de platine ou d'argent sur le support utilisé. Ceci provoque une diminution de la surface spécifique "active" du catalyseur entraînant une modification négative des performances. Notamment, on observe une augmentation de la tension de cellule entraînant une augmentation de la consommation d'énergie.

Tomantscheger et al. (J. Power Sources 1992, vol. 39 (1) pages 21-41) ont observé lors de l'exposition à la potasse de catalyseurs constitués de particules de platine supportées sur charbon, une agglomération importante desdites particules de platine. Le diamètre des particules de Pt passent de 50 Å à 200 Å après environ 48 heures d'exposition à la potasse à 80°C.

Pataki et al. (Electrochemical Soc. Meet., Toronto, Ont, mai 12-17, 1985. Ext. Abstr. n° 659, pages 924-925) ont montré qu'en traitant préalablement un catalyseur constitué de particules de platine supportées sur charbon à l'oxyde de carbone (CO), ils observaient une agglomération moins importante desdites particules de Pt lorsque, comme précédemment, ledit catalyseur était exposé à la potasse.

La demanderesse a maintenant trouvé qu'il était possible de diminuer, voire de supprimer l'agglomération des particules de platine ou d'argent de catalyseurs supportés en déposant simultanément, sur le support, lors de la préparation dudit catalyseur un premier métal M1 choisi parmi le platine et l'argent et un second métal M2, différent du premier, et choisi dans le groupe constitué par le platine, l'argent, l'or, le ruthénium, l'iridium, le rhodium, l'osmium.

Un objet de la présente invention est donc un procédé d'obtention d'un catalyseur bimétallique stabilisé comprenant un support conducteur de courant électrique et un dépôt métallique constitué par un premier métal M1 choisi parmi le platine et l'argent et un second métal M2, différent du premier, et choisi dans le groupe constitué par le platine, l'argent, l'or, le ruthénium, l'iridium, le rhodium, l'osmium.

De préférence, M2 est le platine, l'argent ou le ruthénium.

Selon la présente invention, le rapport massique M1/M2 des métaux M1 et M2 du dépôt métallique est au moins égal à 1 et, de préférence, compris entre 1 et 20.

Selon la présente invention, on utilisera comme support conducteur de courant électrique des matières carbonées tels que graphite, noir au four, noir de carbone, poudre de carbone ayant des surfaces spécifiques au moins égales à 50 m$^2$/g et, de préférence, comprise entre 100 et 600 m$^2$/g. Ces matières carbonées peuvent être préalablement traitées notamment pour créer des groupements fonctionnels à la surface de la matière carbonée.

A titre d'illustration de tels supports carbonés, on citera le graphite référencé TIMCAL HSAG-300 ayant une surface spécifique de 360 m$^2$/g, le Sibunit 5 qui est un carbone ayant une surface spécifique de 360 m$^2$/g, le Carbone VULCAN XC-72R qui est un noir au four ayant une surface spécifique de 300 m$^2$/g.

Le catalyseur bimétallique de la présente invention est préparé par co-réduction de mélanges de sels métalliques réductibles selon un procédé qui consiste à imprégner, simultanément, en milieu solvant, le support conducteur de courant électrique par une solution d'un sel métallique du premier métal M1, choisi parmi le platine et l'argent, et par une solution d'un sel métallique du second métal M2, différent du premier, et choisi dans le groupe constitué par le platine, l'argent, l'or, le ruthénium, l'iridium, le rhodium, l'osmium ; à évaporer à sec, lentement, sous agitation et sous barbotage de gaz inerte la suspension constituée par les solutions des sels métalliques des métaux M1 et M2 et le support carboné ; à sécher la poudre obtenue, sous pression atmosphérique, à une température comprise entre 60°C et 80°C puis, sous pression réduite à une température comprise entre 90°C et 110°C ; à soumettre la poudre séchée obtenue à un courant d'hydrogène, à des températures allant de 300°C et 600°C, obtenues selon une vitesse de montée en température comprise entre 0,2°C et 1,5°C par minute et, de préférence, allant de 0,2°C à 1°C par minute, puis à arrêter le chauffage ou bien à maintenir la température obtenue pendant une durée au plus égale à 20 heures et, de préférence, comprise entre 2 heures et 16 heures.

De préférence, on utilise des solutions alcooliques ou hydroalcooliques des sels métalliques des métaux M1 et M2. L'alcool préféré est l'éthanol. Les concentrations pondérales en sels métalliques des métaux M1 et M2 desdites solutions peuvent varier dans une large mesure. Elles peuvent aller de quelques grammes à quelques dizaines de grammes de sels par litre. Elles sont calculées d'une façon telle que l'on obtienne, lorsque l'on effectue le mélange desdites solutions contenant des sels de métaux M1 et M2, un rapport massique M1/M2, des métaux M1 et M2 à déposer simultanément sur le support, au moins égal à 1 et, de préférence compris entre 1 et 20.

Le mélange desdites solutions effectué, on introduit ensuite un support carboné dans ledit mélange, un solvant d'imprégnation tel que le benzène, le toluène à raison d'au moins 10 ml de solvant par gramme de support, puis on maintient sous agitation et sous barbotage d'azote la suspension obtenue pendant quelques jours à température ambiante. Ceci permet l'évaporation des solvants et une parfaite imprégnation du support par les sels métalliques.

Ensuite, on sèche la poudre obtenue d'abord à pression atmosphérique à une température comprise entre 60°C et 80°C, de préférence, à une température voisine de 70°C, puis sous pression réduite à une température comprise entre 90°C et 110°C et, de préférence, voisine de 100°C.

A ce stade, le support est imprégné par le sel de M1 et le sel de M2. On effectue ensuite la réduction des cations sous courant d'hydrogène.

La stabilité des catalyseurs bimétalliques de la présente invention ainsi obtenus est testée. A cet effet, ils sont mis en suspension dans des solutions alcalines à des températures comprises entre 60°C et 90°C sous courant d'oxygène pendant plusieurs heures, voire plusieurs jours.

L'évolution de la taille des particules M1 et du dépôt métallique constitué par M1 et M2 est suivie avant et après traitement par diffraction aux rayons X.

Cette méthode d'analyse permet de constater que l'on obtient un catalyseur bimétallique supporté qui est stabilisé.

En effet, les particules de métal M1 ne s'agglomèrent plus lorsqu'elles se trouvent être déposées simultanément sur un support avec des particuels d'un métal M2, différent du métal M1.

Les catalyseurs bimétalliques supportés, stabilisés selon la présente invention peuvent être utilisés pour des cellules électrochimiques.

Notamment, ces catalyseurs peuvent être utilisés dans la confection d'électrodes pour des cellules d'électrolyse à cathode à réduction d'oxygène.

Les catalyseurs bimétalliques à base de platine ou d'argent de la présente invention présentent l'avantage de maintenir constant l'activité massique définie comme le courant de réduction par unité de masse du catalyseur dans le temps ou bien encore de maintenir constante l'activité spécifique du catalyseur, c'est-à-dire le courant de réduction par unité de surface active.

Les exemples qui suivent illustrent l'invention.

## EXEMPLES

## PREPARATION DES CATALYSEURS :

### Matériaux utilisés :

Support carboné :

Carbone VULCAN XC-72R est un support de référence. Il s'agit d'un noir au four, de surface spécifique 300 $m^2/g$ environ, dont 120 $m^2/g$ microporeux et 88 $m^2/g$ mésoporeux.

Métaux

Les deux métaux utilisés sont le platine et l'argent. Le platine se présente sous forme d'une solution aqueuse de $H_2PtCl_6$ à 85,5 g de Pt par litre. L'argent est sous forme $AgNO_3$ (solide).

Alcool utilisé pour les solutions hydroalcooliques ou alcooliques des sels métalliques

Ethanol absolu (99,85 %)

Solvant d'imprégnation

Toluène (99,90 %).

**Préparation des catalyseurs selon l'invention :**

Cette préparation a été effectuée sur VULCAN (non oxydé), avec la quantité de sel métallique nécessaire pour déposer simultanément sur le support des teneurs massiques de métal M1 et de métal M2 respectivement égales à 10 %.

Pour préparer un catalyseur au platine (catalyseur P), on verse dans un bécher la quantité adéquate d'une solution aqueuse de $H_2PtCl_6$ (82,5 Pt/l) dans de l'éthanol. Pour un catalyseur à l'argent (catalyseur A), on pèse une quantité adéquate de $AgNO_3$ solide qui est dissous dans de l'éthanol. Pour les catalyseurs Ag + Pt (catalyseur AP), on combine les deux solutions de sel métallique pour obtenir un rapport massique Pt/Ag égal à 1.

Puis on introduit 4g de support VULCAN et 40 ml de toluène. Cette suspension est laissée sous agitation et sous barbotage d'azote pendant 10 jours à température ambiante, ce qui provoque l'évaporation des solvants. La poudre ainsi obtenue est séchée 24 h à 85°C à l'air, puis 24 h à 100°C sous pression réduite.

A ce stade, elle se présente sous la forme d'un dépôt de sel de platine II et/ou d'argent I sur le support carboné. Ces cations sont ensuite réduits par un courant d'hydrogène selon le protocole ci-après.

L'échantillon est soumis à une vitesse moyenne de montée en température de 1°C par minute jusqu'à 500°C. Cette température est maintenue ensuite pendant 16 heures.

Les catalyseurs préparés selon le procédé ci-dessus mentionné ont été caractérisés par diffraction des rayons X aux grands angles (méthode des poudres) sur un diffractomètre BRUKER AXS D5000. Le diffractomètre est équipé d'un tube à anode de cuivre et d'un détecteur solide Si (Li) refroidi par effet Peltier.

Nous utilisons les diffractogrammes pour évaluer la taille moyenne des cristallites de métal déposés sur les supports carbonés. On se base dans notre cas sur les raies (111) et (220) du métal (platine et argent), dont on détermine la largeur à mi-hauteur β. La largeur à mi-hauteur est obtenue après une modélisation de la raie considérée à l'aide d'une fonciton Pseudo-Voig, après retrait du fond continu et prise en compte des éventuels pics recouvrant celui mesuré (logiciel Profile/Diffrac-At sur PC). On prend soin de travailler en couche mince ($\approx$220 $\mu$m) et de corriger la largeur mesurée de l'élargissement intrinsèque apporté par le diffractomètre. On obtient alors la taille moyenne des cristallites D (nm), dans la direction perpendiculaire aux plans cristallographiques concernés, grâce à l'expression de Scherrer :

$$D = \frac{0,9 \times \lambda}{\beta c \times \cos\theta}$$

avec $\beta_c = (\beta^2 - \beta_o^2)^{\frac{1}{2}}$

$\lambda$ = 0,15418 nm ;
β (rad) : largeur à mi-hauteur de la raie du métal analysé,
$\beta_o$ (rad) : largeur à mi-hauteur de la raie d'un étalon parfaitement bien cristallisé et voisine de la raie du métal analysé,
θ : angle de Bragg.

Cette évaluation a une valeur comparative. Elle sert à estimer l'effet du traitement sur la taille moyenne des cristallites. L'incertitude de cette meusure est de 10 à 20 % environ, dûe au bruit de fond et aux erreurs sur la ligne de base et sur l'estimation de la largeur du pic à la base (bornes de l'intégration).

Pour tester la stabilité des catalyseurs, on utilisera le dispositif ci-après.

Six réacteurs en série en PFA (polyfluoroalkoxy) sont alimentés en oxygène en parallèle. On verse dans chaque réacteur 90 ml de soude 50 % et 0,5 g de catalyseur, à quoi on ajoute un barreau aimanté. Les réacteurs sont ensuite placés dans un bain d'huile. Chaque réacteur est alimenté en oxygène. Leur température est régulée à 90°C à l'aide du bain d'huile et d'un thermomètre à contact. Le débit d'oxygène est supérieur à 4 bulles par seconde. Le traitement dure 100 heures. A la fin du traitement, les échantillons sont filtrés sous aspiration (trompe à eau) sur système Millipores, avec des filtres en PTFE hydrophilisé. Ils sont rincés avec 3 fois 10 à 20 ml d'eau déminéralisée. Ils sont ensuite séchés à l'étuve 48 heures à 85°C, puis 24 heures à 100°C dans une étuve sous pression réduite .

On a testé les catalyseurs A, P (non conformes à l'invention) et AP (conforme à l'invention) :

- A : catalyseur à base seulement d'argent : 10 % d'argent déposés sur VULCAN,
- P : catalyseur à base seulement de platine : 10 % de platine déposés sur VULCAN.
- AP : catalyseur selon l'invention contenant 10 % de platine et 10 % d'argent déposés en même temps sur VULCAN.

Les caractéristiques déterminées par diffraction aux rayons X, avant et après exposition à la soude 50 % à 90°C pendant 100 heures, sont reportées ci-après.

**Catalyseur P (non conforme à l'invention)**

Espèces cristallisées avant traitement :

$$Pt : \quad \text{raie (111) IR*} \quad = 100 \quad : D = 5 \text{ nm}$$
$$\text{raie (220)} \quad IR = 25 \quad : D = 4,5 \text{ nm}$$

[*IR signifie Intensité de la raie]
taille de la maille élémentaire a = 3,9213 Å
Espèces cristallisées après traitement

$$Pt : \quad \text{raie (111) IR = 100} \quad : D = 12 \text{ nm}$$
$$\text{raie (220)} \quad IR = 25 \quad : D = 9,5 \text{ nm}$$

taille de la maille élémentaire a = 3,9213 Å
On constate une agglomération importante des espèces cristallisées de Pt.

**Catalyseur A (non conforme à l'invention) :**

Espèces cristallisées avant traitement :

$$Ag : \quad \text{raie (111)} \quad IR = 100 \quad : D = 80 \text{ nm}$$
$$\text{raie (220)} \quad IR = 25 \quad : D = 25 \text{ nm}$$

Espèces cristallisées après traitement :

$$Ag : \quad \text{raie (111)} \quad IR = 100 \quad : D = 120 \text{ nm}$$
$$\text{raie (220)} \quad IR = 25 \quad : D = 50 \text{ nm}$$

On constate une agglomération importante des espèces cristallisées d'argent.

**Catalyseur AP (selon l'invention) :**

Espèces cristallisées avant traitement
Alliage à forte teneur en Pt : Solution solide Pt/Ag ayant environ 11 % en

$$\text{atome d'argent :} \quad \text{raie (111)} \quad : D = 4,5 \text{ nm}$$
$$\text{raie (220)} \quad : D = 4 \text{ nm}$$

(a = 3,9410 Å)
Alliage à forte teneur en Ag : Solution solide Ag-Pt ayant environ 23 % en

$$\text{atome de platine :} \quad \text{raie (111)} \quad : D = 12,5 \text{ nm}$$
$$\text{raie (220)} \quad : D = 7,9 \text{ nm}$$

Sur le charbon VULCAN, les deux espèces cristallisées (solutions solides Pt-Ag et Ag-Pt sont présentes et se distinguent par leurs teneurs respectives en Ag et en Pt ; sachant que sur le support carboné VULCAN, on a un rapport massique Pt/Ag égal à 1 (10 % en poids de platine, 10 % en poids d'argent).

Espèces cristallisées après traitement :

- Solution solide Pt-Ag :  raie (111)  : D = 4,9 nm
  raie (220)  : D = 3,8 nm
- Solution solide Ag-Pt :  raie (111)  : D = 12,7 nm
  raie (220)  : D = 7,2 nm

On constate aucune agglomération.

**EVALUATION DE L'ACTIVITE DES CATALYSEURS VIS-A-VIS DE LA REDUCTION DE L'OXYGENE EN MILIEU ALCALIN :**

Préparation de l'électrode pour les mesures d'activité :

Une suspension est préparée par mélange de la poudre de catalyseur, d'eau ultra pure et d'éthanol. Cette suspension est ensuite homogénéisée par agitation aux ultrasons pendant 2 heures. On ajoute à ce mélange une suspension de PTFE, et le mélange final est à nouveau homogénéisé aux ultrasons.

Un embout en carbone vitreux est préalablement poli avec de la pâte diamantée (jusqu'à 1 $\mu$m) et rincé successivement dans de l'acétone, de l'éthanol et de l'eau ultra pure pendant 15 minutes aux ultrasons. Puis il est séché dans une étuve.

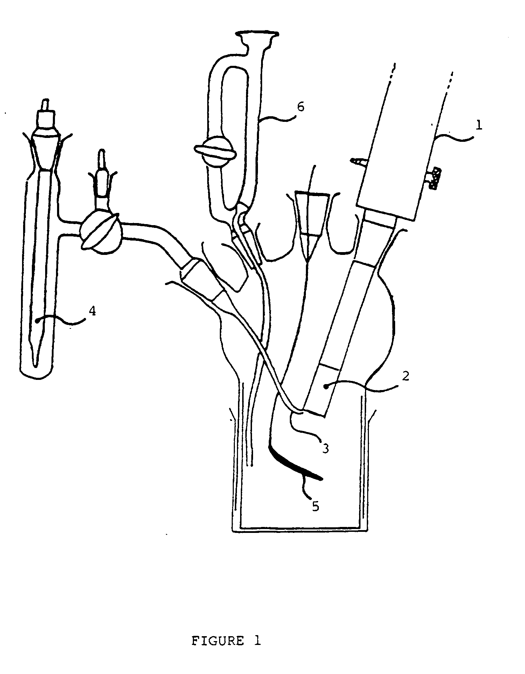

On dépose alors 10 $\mu$l de la suspension finale à l'aide d'une micro seringue sur l'embout en carbone vitreux. Il est mis à sécher pendant une nuit à température ambiante, puis 15 minutes dans un four à 200°C pour assurer la tenue mécanique du dépôt. L'électrode ainsi obtenue est installée dans la cellule représentée sur la figure 1.

La cellule est composée d'une électrode à disque tournant (1) sur laquelle est installé l'embout préalablement préparé (2), d'un capillaire de Luggin (3) relié à l'électrode de référence (4), d'une contre électrode en platine (5) et d'un barboteur (6) pour l'alimentation en oxygène. L'électrode tournante (1), l'électrode de référence (4) et la contre électrode (5) sont reliés à un potentiostat (non représenté sur la figure 1).

Mesures de l'activité :

La surface active en platine de l'électrode est évaluée à partir du tracé d'une courbe de voltampérométrie cyclique en milieu $H_2SO_4$ 1M (suprapur) sous atmosphère d'azote (argon) sur le domaine d'adsorption et de désorption de l'hydrogène. L'électrode est ensuite placée dans une cellule analogue contenant de la soude 1 mole/l fabriquée à partir de soude MERCK suprapur et d'eau ultra pure. La température de la cellule est fixée à 25°C. L'oxygène est mis en barbotage dans la soude pendant plusieurs minutes avant le début des essais afin de saturer la soude en oxygène dissous. On réalise ensuite un balayage en potentiel entre + 0,1V (Hg/HgO) et -0,6 V(Hg/HgO) à 1 mV/s et pour différentes vitesses de rotation de l'électrode tournante (500, 1000, 2000 et 4000 tours/min) et l'on relève le courant observé pour un potentiel de -60 mV(Hg-HgO) pour les différentes vitesses de rotation de l'électrode. A partir de ces valeurs de courant, de la surface active du catalyseur, et en utilisant l'équation de Lévich et la loi de Fick en régime stationnaire, il est possible de déterminer ik, densité de courant relative à l'activité intrinséque du catalyseur, pour un potentiel de -60 mV(Hg-HgO). ("Electrochimie : principes, méthodes et applications", A.J. Bard, C.R. Faulkner, Eds MASSON, 1983, chap 8).

Résultats :

Le catalyseur P est ainsi évalué. On mesure une surface active de 14,6 cm$^2$, et on détermine un $i_k$ de 0,76 mA pour un potentiel de -60 mv (Hg-HgO), soit une activité spécifique de 52 $\mu$A/cm$^2$.

Le catalyseur AP est évalué de façon équivalente. Sa surface active est de 15,9 cm$^2$, le $i_k$ est de 0,87 mA, soit une activité spécifique de 55 $\mu$A/cm$^2$.

**Revendications**

**1.** Procédé d'obtention d'un catalyseur bimétallique stabilisé, **caractérisé en ce qu'**il consiste à imprégner, simultanément, en milieu solvant, un support conducteur de courant électrique, par une solution d'un sel métallique d'un premier métal M1, choisi parmi le platine et l'argent, et par une solution d'un sel métallique d'un second métal M2, différent du premier, et choisi dans le groupe constitué par le platine, l'argent, l'or, le ruthénium, l'iridium, le rhodium, l'osmium ; à évaporer, à sec, lentement, sous agitation et sous barbotage de gaz inerte la suspension constituée par les solutions des sels métalliques des métaux M1 et M2 et le support carboné ; à sécher la poudre obtenue sous pression atmosphérique à une température comprise entre 60°C et 80°C puis, sous pression réduite, à une température comprise entre 90°C et 110°C ; à soumettre la poudre séchée obtenue à un courant d'hydrogène, à des températures comprises entre 300°C et 600°C, obtenues selon une vitesse de montée en température comprise entre 0,2°C et 1,5°C par minute, puis à arrêter le chauffage ou bien à maintenir la température obtenue pendant une durée au plus égale à 20 heures et, de préférence, comprise entre 2 heures et 16 heures.

**2.** Procédé selon la revendication 1, **caractérisé en ce que** les solutions des sels métalliques des métaux M1 et M2 sont des solutions alcooliques ou hydroalcooliques.

**3.** Procédé selon l'une des revendications 1 ou 2, **caractérisé en ce que** les concentrations pondérales des solutions en sels métalliques des métaux M1 et M2 sont calculées d'une façon telle que l'on obtienne, lorsque l'on effectue le mélange desdites solutions contenant des sels de métaux M1 et M2, un rapport massique M1/M2 des métaux M1 et M2 à déposer simultanément sur le support, égal à 1 et, de préférence, compris entre 1 et 20.

**4.** Procédé selon la revendication 1, **caractérisé en ce que** le solvant d'imprégnation est le toluène.

**5.** Catalyseur bimétallique stabilisé obtenu selon l'une des revendications 1 à 4, **caractérisé en ce qu'**il comprend un support conducteur de courant électrique et un dépôt métallique constitué par un premier métal M1 choisi parmi le platine et l'argent et un second métal M2, différent du premier, et choisi dans le groupe constitué par le platine, l'argent, l'or, le ruthénium, l'iridium, le rhodium, l'osmium.

**6.** Catalyseur selon la revendication 5, **caractérisé en ce que** le support conducteur de courant électrique est une matière carbonée ayant une surface spécifique au moins égale à 50 m$^2$/g.

**7.** Catalyseur selon la revendication 6, **caractérisé en ce que** la matière carbonée à une surface spécifique comprise entre 100 m$^2$/g et 600 m$^2$/g.

**8.** Catalyseur selon l'une des revendications 5 à 7, **caractérisé en ce que** M1 est le platine.

**9.** Catalyseur selon l'une des revendications 5 à 7, **caractérisé en ce que** M1 est l'argent.

**10.** Catalyseur selon l'une des revendications 5 à 7, **caractérisé en ce que** M1 est le platine et M2 est l'argent.

**11.** Catalyseur selon l'une des revendications 5 à 10, **caractérisé en ce que** le rapport massique M1/M2, des métaux M1 et M2 du dépôt métallique est au moins égal à 1 et, de préférence compris entre 1 et 20.

**12.** Utilisation d'un catalyseur selon l'une des revendications 5 à 11 pour la confection d'électrodes pour des cellules électrochimiques.

**13.** Utilisation selon la revendication 12, **caractérisée en ce que** la cellule électrochimique est une cellule d'électrolyse à cathode à réduction d'oxygène.

**Claims**

**1.** Method of obtaining a stabilized bimetallic catalyst, **characterized in that** it consists: in simultaneously impregnating, in solvent medium, an electrically conducting support with a solution of a metal salt of a first metal M1, chosen from platinum and silver, and with a solution of a metal salt of a second metal M2, different from the first, and chosen from the group consisting of platinum, silver, gold, ruthenium, iridium, rhodium and osmium; in evaporating to dryness slowly, with stirring and under a flow of inert gas, the suspension formed by the solutions of the metal salts of the metals M1 and M2 and the carbon support; in drying the powder obtained under atmospheric pressure at a temperature between 60°C and 80°C and then, under reduced pressure, at a temperature between 90°C and 110°C; in subjecting the dried powder obtained to a stream of hydrogen, at temperatures between 300°C and 600°C, obtained with a rate of temperature rise of between 0.2°C and 1.5°C per minute, the heating then being stopped or the temperature obtained being maintained for a time of at most 20 hours and preferably between 2 hours and 16 hours.

2. Method according to Claim 1, **characterized in that** the solutions of the metal salts of the metals M1 and M2 are alcoholic or aqueous-alcoholic solutions.

3. Method according to either of Claims 1 and 2, **characterized in that** the concentrations by weight of the solutions of the metal salts of the metals M1 and M2 are calculated in such a way that, when the said solutions containing salts of metals M1 and M2 are mixed together, a mass ratio M1/M2, of the metals M1 and M2 to be simultaneously deposited on the support, equal to 1 and preferably between 1 and 20, is obtained.

4. Method according to Claim 1, **characterized in that** the impregnation solvent is toluene.

5. Stabilized bimetallic catalyst obtained according to one of Claims 1 to 4, **characterized in that** it comprises an electrically conducting support and a metal coating formed by a first metal M1 chosen from platinum and silver and a second metal M2, different from the first and chosen from the group formed by platinum, silver, gold, ruthenium, iridium, rhodium and osmium.

6. Catalyst according to Claim 5, **characterized in that** the electrically conducting support is a carbon material having a specific surface area of at least 50 $m^2/g$.

7. Catalyst according to Claim 6, **characterized in that** the carbon material has a specific surface area of between 100 $m^2/g$ and 600 $m^2/g$.

8. Catalyst according to one of Claims 5 to 7, **characterized in that** M1 is platinum.

9. Catalyst according to one of Claims 5 to 7, **characterized in that** M1 is silver.

10. Catalyst according to one of Claims 5 to 7, **characterized in that** M1 is platinum and M2 is silver.

11. Catalyst according to one of Claims 5 to 10, **characterized in that** the mass ratio M1/M2 of the metals M1 and M2 of the metal coating is at least equal to 1 and preferably between 1 and 20.

12. Use of a catalyst according to one of Claims 5 to 11, for making up electrodes for electrochemical cells.

13. Use according to Claim 12, **characterized in that** the electrochemical cell is an electrolysis cell with an oxygen-reduction cathode.

**Patentansprüche**

1. Verfahren zur Herstellung eines stabilisierten bimetallischen Katalysators, **dadurch gekennzeichnet, dass** es darin besteht, gleichzeitig in einem Lösungsmedium einen den elektrischen Strom leitenden Träger durch eine Lösung eines Metallsalzes eines ersten Metalls M1, das unter Platin und Silber ausgewählt wird, und durch eine Lösung eines Metallsalzes eines zweiten Metalls M2, das sich vom ersten unterscheidet und aus der Gruppe ausgewählt wird, die aus Platin, Silber, Gold, Ruthenium, Iridium, Rhodium, Osmium besteht, zu imprägnieren; trocken, langsam unter Schütteln und Rühren durch Einblasen von inertem Gas die Suspension zu verdampfen, die von den Lösungen der Metallsalze der Metalle M1 und M2 und dem kohlenstoffhaltigen Träger gebildet ist; das erhaltene Pulver unter Luftdruck bei einer Temperatur zwischen 60 °C und 80 °C und dann unter verringertem Druck bei einer Temperatur zwischen 90 °C und 110 °C zu trocknen; das erhaltene getrocknete Pulver einem Wasserstoffstrom bei Temperaturen zwischen 300 °C und 600 °C zu unterziehen, die nach einer Geschwindigkeit der Temperaturerhöhung zwischen 0,2 °C und 1,5 °C pro Minute erhalten wurden, dann die Erhitzung anzuhalten oder auch die erhaltene Temperatur während einer Dauer höchstens gleich 20 Stunden und vorzugsweise zwischen 2 Stunden und 16 Stunden aufrecht zu erhalten.

2. Verfahren nach Anspruch 1, **dadurch gekennzeichnet, dass** die Lösungen der Metallsalze der Metalle M1 und M2 alkoholische oder hydroalkoholische Lösungen sind.

**3.** Verfahren nach einem der Ansprüche 1 oder 2, **dadurch gekennzeichnet, dass** die Gewichtskonzentrationen der Lösungen aus Metallsalzen der Metalle M1 und M2 derart berechnet sind, dass beim Mischen der Lösungen, die die Metallsalze M1 und M2 enthalten, ein Masseverhältnis M1/M2 der gleichzeitig auf den Träger aufzubringenden Metalle M1 und M2 gleich 1 und vorzugsweise zwischen 1 und 20 erhalten wird.

**4.** Verfahren nach Anspruch 1, **dadurch gekennzeichnet, dass** das Imprägnierlösungsmittel Toluol ist.

**5.** Stabilisierter bimetallischer Katalysator, der nach einem der Ansprüche 1 bis 4 hergestellt wird, **dadurch gekennzeichnet, dass** er einen den elektrischen Strom leitenden Träger und eine Metallschicht umfasst, die von einem ersten Metall M1, das unter Platin und Silber ausgewählt wird, und einem zweiten Metall M2 gebildet ist, das sich vom ersten unterscheidet und aus der Gruppe ausgewählt wird, die aus Platin, Silber, Gold, Ruthenium, Iridium, Rhodium, Osmium besteht.

**6.** Katalysator nach Anspruch 5, **dadurch gekennzeichnet, dass** der den elektrischen Strom leitende Träger ein kohlenstoffhaltiger Stoff mit einer spezifischen Fläche von mindestens gleich 50 $m^2$/g ist.

**7.** Katalysator nach Anspruch 6, **dadurch gekennzeichnet, dass** der kohlenstoffhaltige Stoff eine spezifische Fläche zwischen 100 $m^2$/g und 600 $m^2$/g hat.

**8.** Katalysator nach einem der Ansprüche 5 bis 7, **dadurch gekennzeichnet, dass** M1 Platin ist.

**9.** Katalysator nach einem der Ansprüche 5 bis 7, **dadurch gekennzeichnet, dass** M1 Silber ist.

**10.** Katalysator nach einem der Ansprüche 5 bis 7, **dadurch gekennzeichnet, dass** M1 Platin und M2 Silber ist.

**11.** Katalysator nach einem der Ansprüche 5 bis 10, **dadurch gekennzeichnet, dass** das Masseverhältnis M1/M2 der Metalle M1 und M2 der Metallschicht mindestens gleich 1 ist und vorzugsweise zwischen 1 und 20 beträgt.

**12.** Verwendung eines Katalysators nach einem der Ansprüche 5 bis 11 für die Herstellung von Elektroden für elektrochemische Zellen.

**13.** Verwendung nach Anspruch 12, **dadurch gekennzeichnet, dass** die elektrochemische Zelle eine Elektrolysezelle mit Kathode mit Sauerstoffreduktion ist.

FIGURE 1